# DEMANDE DE BREVET EUROPEEN

(11) **EP 2 308 671 A1**
(43) Date de publication de la demande: **13.04.2011**
(21) Numéro de dépôt: 10186345.4
(22) Date de dépôt: 04.10.2010
(51) Int. Cl.: B29C 73/02, B05D 5/00

(54) **Méthode de réparation d'un article, notamment une glace de phare pour véhicule automobile**

(30) Priorité: 06.10.2009 FR 0956938
(71) Demandeur: Difachimie, 77290 Mitry-Mory (FR)
(72) Inventeur: Errico, Laurent, 73460 Frontenex (FR)
(74) Mandataire: CAPRI

(57) **Abrégé**

Méthode de réparation d'un article comprenant un substrat en polycarbonate revêtu d'une couche de protection, tel qu'une glace de phare pour véhicule automobile, la couche de protection étant localement endommagée ou altérée, tel que par des rayures, la méthode comprenant les étapes successives suivantes :
a) enlever la totalité de la couche de protection jusqu'au substrat en polycarbonate,
b) abraser le substrat en polycarbonate avec des abrasifs successifs présentant des tailles de grains décroissantes,
c) appliquer une nouvelle couche de protection sur le substrat abrasé.

## Description

La présente invention concerne une méthode de réparation d'un article comprenant un substrat en polycarbonate revêtu d'une couche de protection, telle qu'une glace de phare pour véhicule automobile, un parebrise ou une bulle de motocyclette. L'article est de préférence transparent aux rayons du visible, mais il peut également être opaque dans certaines applications. Une application privilégiée de la présente invention est celle de la réparation dans le domaine de l'automobile, dans le sens le plus large, mais d'autres domaines peuvent également être concernés.

La glace de phare est la paroi transparente qui obture le boîtier de phare d'un véhicule automobile. Ce boîtier de phare comprend généralement un ou plusieurs modules d'éclairage remplissant diverses fonctions, comme par exemple les feux de positionnement, les feux de croisement ou les pleins phares. Les faisceaux lumineux émis par les modules traversent la glace de phare, qui est donc transparente. Autrefois, les glaces de phares étaient réalisées par moulage de verre, et présentaient de ce fait une très grande résistance aux rayures, une grande stabilité dans le temps, mais elles avaient l'inconvénient de se briser au moindre choc. De plus, les glaces de phares en verre étaient limitées à des formes géométriques restreintes. Ces glaces de phares traditionnelles ont été depuis peu remplacées par des glaces de phares en polycarbonate revêtu d'une couche de protection. Contrairement au verre, le polycarbonate est très résistant aux chocs, mais pas aux rayures. De plus, sa couche de protection a tendance à devenir opaque avec le temps. Jusqu'à présent, lorsqu'une telle glace de phare en polycarbonate était rayée ou altérée, la seule solution était le remplacement complet du boîtier de phare. Or, certains boîtiers sont particulièrement coûteux.

Aujourd'hui, nous sommes dans l'ère du recyclage, et les carrossiers préfèrent toujours la remise en état d'un élément à son remplacement, dans la mesure où l'on peut recréer l'élément dans son état d'origine : la preuve étant la réparation des plastiques. Lors d'un sinistre, très souvent, la glace de phare est rayée ou profondément frottée. D'autre part, le revêtement de protection à base de résine vieillissant très mal dans le temps, les glaces de phares deviennent souvent complètement opaques au bout de quelques années, et aujourd'hui les contrôles techniques refusent les véhicules ayant des phares qui créent un flou non règlementaire.

La présente invention a pour but de remédier aux inconvénients précités de l'art antérieur en définissant une solution alternative au remplacement pur et simple du boîtier de phare. La présente invention propose une solution surprenante aux endommagements ou altérations localisées. Bien entendu, un souci de la présente invention est d'offrir une solution alternative peu coûteuse pouvant être mise en oeuvre facilement.

Pour atteindre ces buts, la présente invention propose une méthode de réparation d'un article comprenant un substrat en polycarbonate revêtu d'une couche de protection, tel qu'une glace de phare pour véhicule automobile, la couche de protection étant localement endommagée ou altérée, la méthode comprenant les étapes successives suivantes :
a) enlever la totalité de la couche de protection jusqu'au substrat en polycarbonate,
b) abraser le substrat en polycarbonate avec des abrasifs successifs présentant des tailles de grains décroissantes,
c) appliquer une nouvelle couche de protection sur le substrat abrasé.

Jusqu'alors, il n'y avait aucune solution pour réparer les rayures des glaces de phares de manière à les remettre dans leur état d'origine. Certaines tentatives infructueuses ont été effectuées, mais se sont soldées par des échecs, car elles proposaient de traiter uniquement les rayures et les zones environnantes, alors qu'il faut, selon l'invention, enlever la totalité de la couche de protection jusqu'au substrat en polycarbonate, même si cette dernière est dans sa majeure partie intacte. L'enlèvement complet de la couche de protection est tout à fait contraire aux pratiques courantes dans le domaine automobile où l'on traite les rayures de carrosserie uniquement localement : en effet, on ne retire pas la totalité de la peinture pour réparer des rayures sur la carrosserie. C'est dans cette étape paradoxale que réside principalement l'inventivité de la présente invention.

Avantageusement, la méthode de réparation comprend, dans le cas où l'article est endommagé par des rayures, une étape préliminaire, précédant l'étape d'enlèvement a), consistant à poncer les rayures avec un abrasif de grain de l'ordre de 150, puis un abrasif de grain de l'ordre de 240. Il faut donc en premier lieu éliminer les rayures.

Avantageusement, l'étape d'enlèvement a) comprend de poncer la couche de protection avec un abrasif de grain de l'ordre de 320.

Avantageusement, l'étape d'abrasion b) comprend d'abraser avec des abrasifs ayant des grains allant progressivement d'environ 400 à 6 000, avantageusement 12 000.

De préférence, un révélateur d'état de surface est appliqué sur le substrat. Le révélateur d'état de surface peut être appliqué entre chaque abrasion.

Avantageusement, l'étape d'application c) comprend en outre de cuire la nouvelle couche de protection au moins 30 minutes.

Avantageusement, l'étape d'application c) comprend en outre de retirer de la peau d'orange formée à la surface de la nouvelle couche de protection.

Avantageusement, l'étape d'application c) comprend en outre de retirer la peau d'orange formée à la surface de la nouvelle couche de protection. De préférence, l'étape de retrait de la peau d'orange comprend d'abraser la surface de la nouvelle couche de protection avec des abrasifs ayant des grains allant d'environ 1 500 à 3 000. De préférence, la méthode de réparation comprend ultérieurement de lustrer la couche de protection avec une pâte optique, avantageusement au moyen d'une mousse souple et alvéolée.

La présente invention définit également une utilisation de la méthode de réparation telle que définie ci-dessus pour la réparation, la rénovation et/ou la remise en état d'articles choisie parmi le groupe constitué des glaces de phares, des pare-brises et des bulles de motocyclette, etc.

La méthode de réparation de l'invention intègre une étape essentielle, à savoir d'enlever la totalité de la couche de protection jusqu'au substrat en polycarbonate. D'autre part, la présente invention définit plusieurs étapes secondaires particulièrement inventives qui permettent d'atteindre le but recherché, à savoir, restaurer la glace de phare dans son état d'origine.

L'invention sera maintenant plus amplement décrite en référence à une méthode de réparation d'une glace de phare de véhicule automobile. Bien entendu, la méthode de réparation de l'invention peut également être appliquée à n'importe quel article comprenant un substrat en polycarbonate revêtu d'une couche de protection, comme c'est le cas pour les pare-brises ou les bulles de motocyclettes.

L'exemple utilisé pour illustrer la présente invention est une glace de phare qui est localement endommagée par des rayures. Ces rayures traversent la couche de protection et pénètrent même dans le substrat en polycarbonate. Bien entendu, un exemple plus simple est celui où les rayures n'endommagent que la couche de protection, laissant le substrat en polycarbonate intact.

Selon un mode de réalisation pratique, la méthode de réparation d'une telle glace de phare comprend les étapes suivantes :
- Mettre des gants en latex pour éviter les traces,
- Poncer les rayures avec une ponceuse orbitale avec un abrasif de grain 150,
- Utiliser ensuite un abrasif de grain 240 pour adoucir les rayures de grain 150,
- Puis prendre un abrasif de grain 320 pour enlever la résine sur la totalité de l'optique,
- Appliquer un guide de ponçage (aérosol/poudre), par exemple un révélateur de couleur, pour vérifier l'efficacité du ponçage au grain 320,
- Continuer à adoucir avec du 400 et 600,
- Appliquer encore un guide de ponçage pour à nouveau vérifier l'efficacité du ponçage,
- Continuer à adoucir avec un abrasif de 800 et 1000,
- Dégraisser avec un dégraissant doux, puis regarder s'il y a encore des défauts ex : marques de ponçage/rayures, par exemple à l'aide d'un révélateur de défaut liquide,
- Rétablir le faisceau lumineux avec des abrasifs de grain 2400, 3600, 6000 et éventuellement 1200 à l'eau,
- Bien essuyer l'optique, dégraisser et passer un tampon d'essuyage,
- Appliquer 1 voile et 2 couches de résine, ou 3 couches plus fines selon les conditions élément/aérosol/température ambiante tout à 20°,
- Faire cuire l'optique minimum 30 min sous l'infra ou en cabine à 60°,
- Après la cuisson, attendre que l'optique ait bien refroidi que la résine soit bien plastifiée,
- Ôter la peau d'orange avec un abrasif de grain 1500 ou 2000 puis 3600 à l'eau à la main,
- Puis lustrer avec de la pâte optique avec une mousse, de préférence souple et alvéolée,
- Appliquer un anti film (flash touch),
- Attendre que l'anti film sèche 5 min,
- Puis, lustrer avec un chiffon à lustrer.

Bien entendu, certaines de ces étapes ne sont qu'optionnelles, comme par exemple, l'utilisation de gel, l'utilisation de révélateur, le lustrage final, l'application d'un anti film, son séchage, puis son lustrage.

Les caractéristiques essentielles de l'invention résident dans le retrait de la totalité de la couche de protection jusqu'au substrat en polycarbonate, puis son abrasion avec des abrasifs successifs de tailles de grain décroissantes allant de 400 à 6000, voire 12000. L'application d'une nouvelle couche de protection sur le substrat abrasé est également une étape essentielle de l'invention.

Il faut remarquer que l'étape d'abrasion utilise des abrasifs ayant des tailles de grain inhabituelles dans le domaine de la réparation automobile, et notamment les abrasifs de grains 6000 et 12000.

Bien entendu, l'enlèvement total de la couche de protection constitue l'étape phare de la méthode de réparation, mais les autres étapes, pourtant secondaires, sont également avantageuses, car elles participent activement à l'obtention du résultat final, à savoir, recréer la glace de phare telle que dans son état d'origine. Par exemple, l'enlèvement de la peau d'orange, ainsi que lustrage avec une pâte optique à l'aide d'une mousse de préférence souple et alvéolée, en fin de méthode, aide à retrouver l'apparence de la glace de phare et ses qualités optiques à sa sortie d'usine.

## Revendications

1. Méthode de réparation d'un article comprenant un substrat en polycarbonate revêtu d'une couche de protection, tel qu'une glace de phare pour véhicule automobile, la couche de protection étant localement endommagée ou altérée, tel que par des rayures, la méthode comprenant les étapes successives suivantes :
a) enlever la totalité de la couche de protection jusqu'au substrat en polycarbonate,
b) abraser le substrat en polycarbonate avec des abrasifs successifs présentant des tailles de grains décroissantes,
c) appliquer une nouvelle couche de protection sur le substrat abrasé.

2. Méthode de réparation selon la revendication 1, comprenant, dans le cas où l'article est endommagé par des rayures, une étape préliminaire, précédant l'étape d'enlèvement a), consistant à poncer les rayures avec un abrasif de grain de l'ordre de 150, puis un abrasif de grain de l'ordre de 240.

3. Méthode de réparation selon les revendications 1 ou 2, dans laquelle l'étape d'enlèvement a) comprend de poncer la couche de protection avec un abrasif de grain de l'ordre de 320.

4. Méthode de réparation selon les revendications 1, 2 ou 3, dans laquelle l'étape d'abrasion b) comprend d'abraser avec des abrasifs ayant des grains allant progressivement d'environ 400 à 6 000, avantageusement 12 000.

5. Méthode de réparation selon la revendication 4, dans laquelle un révélateur d'état de surface est appliqué sur le substrat.

6. Méthode de réparation selon l'une quelconque des revendications précédentes, dans laquelle l'étape d'application c) comprend en outre de cuire la nouvelle couche de protection au moins 30 minutes.

7. Méthode de réparation selon l'une quelconque des revendications précédentes, l'étape d'application c) comprend en outre de retirer la peau d'orange formée à la surface de la nouvelle couche de protection.

8. Méthode de réparation selon la revendication 7, dans laquelle l'étape de retrait de la peau d'orange comprend d'abraser la surface de la nouvelle couche de protection avec des abrasifs ayant des grains allant d'environ 1 500 à 3 000.

9. Méthode de réparation selon la revendication 8, comprenant ultérieurement de lustrer la couche de protection avec une pâte optique, avantageusement au moyen d'une mousse souple et alvéolée.

10. Utilisation de la méthode de réparation selon l'une quelconque des revendications précédentes pour la réparation, la rénovation et/ou la remise en état d'articles choisis parmi le groupe constitué des glaces de phares, des pare-brises et bulles de motocyclettes.
